Europäisches Patentamt

European Patent Office

Office européen des brevets

(11) Publication number: **0 158 293**
A2

# (12) EUROPEAN PATENT APPLICATION

(21) Application number: 85104150.9

(22) Date of filing: 04.04.85

(51) Int. Cl.⁴: **G 11 B 15/02**
G 11 B 15/18, G 11 B 27/22

(30) Priority: 06.04.84 AU 8782/84
10.12.84 AU 8485/84

(43) Date of publication of application:
16.10.85 Bulletin 85/42

(84) Designated Contracting States:
AT BE CH DE FR GB LI NL SE

(71) Applicant: EPSILON ELECTRONICS PTY LIMITED
343 Pacific Highway
Crows Nest New South Wales 2065(AU)

(72) Inventor: O'Brien, Patrick David
20 Ercildoune Avenue Beverley Park
New South Wales, 2217(AU)

(74) Representative: UEXKÜLL & STOLBERG Patentanwälte
Beselerstrasse 4
D-2000 Hamburg 52(DE)

(54) Improved television commercial monitor device.

(57) An advertisement detection device, for automatically operating the pause control of a video recorder to prevent recording of advertisements, has an input (29) to which video line signal from a video tuner is applied. The video signal is passed through horizontal and vertical sync. separator circuits (2, 3) which extract timing signals from the video signal. The video signal is coupled to a blank level detection circuit by a capacitor (C1) and the black level of the video signal is clamped at a reference voltage determined by a reference circuit (8) which is connected to the signal path by an electronic switch (7) during the back portch period of the video signal. The DC restored video signal is then fed to an input of a comparator (13) which detects the occurrence of black levels on the video signal. The output of the comparator (13) is connected to a retriggerable monostable multivibrator (17) which is maintained in the triggered state unless a black level exists for more than 1 1/2 frame periods, in which case a pulse is transmitted through a set of logic gates (19, 20 and 21) associated with an inhibit circuit to toggle the "pause" flip-flop (23) into the pause state thereby causing a pause signal to be generated at the output (28) of the device. While the pause flip-flop (23) is in the pause state, another electronic switch (9) connects the DC restored video signal to a rate limit circuit formed by a Diode (D1), a capacitor (C2) and a resistor (R1) from which it is connected to a second comparator (11). The second comparator (11) produces a low level when the rate limited video signal reaches the black level, causing a pulse to be transmitted through the logic gates (19, 20 and 21) of the inhibit circuit to toggle the pause flip-flop (23) to the quiescent state. Transitions of the pause signal are inhibited during predetermined periods by a timing circuit (22) in combination with previously mentioned logic gates (20 and 21), and the pause signal is adapted to the requirements of various video recorder requirements by a characterising module (27) which configures the output circuit to generate the correct pause control signals for the recorder equipment in use.

./...

FIG.1

# IMPROVED TELEVISION COMMERCIAL MONITOR DEVICE

The present invention relates generally to the use of video cassette recorders for the unattended recording of television programs, and in particular, the invention provides an improved device for detecting commercial breaks in television transmission and controlling the video recorder to prevent the commercials from being recorded.

Most video cassette recorders (VCRs) have a provision for the machine to be placed in a 'pause' mode during recording, such that program material transmitted while the recorder is in this mode will not be recorded. Various prior art devices have been proposed which make use of this pause facility to automatically eliminate commercials from video recordings, however, each of these prior art devices appears to have one or more deficiencies which make its performance less than optimal.

One prior art device has been proposed which is able to eliminate commercials from black and white transmissions if the station leaves its colour burst signal on whilst transmitting black and white material. Other devices operate by the detection of a momentary blank which usually precedes commercial breaks, these devices usually having a form of retriggerable timing circuit which is triggered by blanks occurring before, during and after a commercial bracket. The timing circuit is kept in a triggered state during the commercial break and a short while into the program material. In Australia, however, this prior art blank sensing device would not be capable of reliable operation, as there are often occassions when no blank is transmitted between commercial messages in a given bracket of commercials, as well as occassions where a particular station will choose not to transmit blanks at the commencement of a bracket of commercial messages. A further disadvantage of this device is that, when blanks are actually transmitted and detected, it will cause the editing control signal to persist for at least 30 seconds beyond the end of a bracket of commercial messages. It is also noted that in the preferred form of the prior art device, the audio signal is also monitored and a valid blank detected only when both video and audio components of the transmitted signal fall below a certain level. Again, under Australian conditions, this would seem to be unreliable as there are often occasions when the audio component of a program continues through the blank period at the onset of a commercial bracket, with no audio break at all. There is also the problem of differentiating between a valid commercial break and a fade that may often be transmitted as part of the program content, particularly with older movies.

Another prior art device is known, which works by sensing blanks, but instead of pausing the VCR at the start of the first commercial, it waits until the second blank is sensed and then it causes the tape to rewind to the point at which the first blank was sensed. This happens every time a blank is sensed within 2 minutes of the last one. Thus, in a bracket of commercial material in Australia, which may go for 2 1/2 to 3 minutes without a single detectable break, this device would be ineffective. It is also noted that this device requires complicated connections to be made to a VCR, which may be impossible to effect on some models.

The present invention ameliorates the difficulties associated with prior art devices by making use of various characteristics of transmitted television signals. Television standards usually make provision for certain information to be transmitted in the vertical blanking period occurring between the vertical sync. pulse interval and the commencement of the picture signal. These lines will generally contain information relating to standard video amplitude, standard frequency bursts, together with phase information, digital information, such as teletext, for decoding by suitable receivers, and information relating to standard colour bar generation. It has been observed that, in the case of some broadcasters, the information carried on one or other of these vertical blanking period lines will be present during the transition of program material and absent during the transmission of commercial material or vice versa, and accordingly the commencement of commercials can be detected by observing the transition of this line from one state to another.

It has also been observed that if suitably sensitive detection equipment is employed, differentiation between blanks and fades can be achieved.  This involves processing the received video signal to produce a suitably filtered and stabilized picture signal with sync. information removed and accurately comparing the picture signal with the blank level.  In general, fades do not reach the full blank level whereas blanking between program and commercials does reach the full blank level.

It has also been observed that the duration of a blank in itself may convey useful information.  The duration of a blank occurring before a commercial break will often be of short duration compared to the one occurring at the end of the commercial break.  Also, if the break occurs in between messages within a bracket of commercials, this break is usually of shorter duration than the one at the end of the bracket.  Further, the video levels at the beginning of a commercial break will typically fall rapidly to the blank level as it will between successive commercials, however the video level will generally fade gradually to the blank level between the last commercial of a commercial break and the recommencement of the program.

In Australia, and most of the other countries having commercial messages within television material, each commercial message is usually of 30 seconds duration, or multiples thereof, and each bracket of commercials usually has a duration which can be predicted to within 1 1/2 minutes.  The duration of each bracket often depends on the program content, for example, live sport 1/2 - 1 1/2 minutes duration, movies 2-3 minutes duration. It has been found that the use of an inhibition signal to prevent activation of the control solenoid, regardless of the content of the video signal, greatly enhances the effectiveness of the device. The inhibition signal is operative during the times when statistically it is least probable that a transition from program material to commercial material or vice versa would take place, thus almost totally eliminating false triggering during these times.

The present invention consists in an advertisement detection device comprising input means for receiving a demodulated video signal from a video tuner, means for detecting the commencement of a commercial break transmitted as part of said video signal, last blank period detection means adapted to detect a blank period between the last commercial of a commercial break and the recommencement of the program, said last blank period detection means being adapted to distinguish between blank periods of short duration and a rapid transition to the blank period from blank periods having a slow transition to the blank period, and also being adapted to distinguish said short blank periods with a rapid transition from blank periods of long duration, and output signal generating means responsive to said commercial blank detection means and said last blank detection means to generate a video recorder pause signal during commercial breaks.

Embodiments of the invention may employ various means for detecting the last blank period of a commercial break. Such as by detecting the last negative transition of a predetermined level prior to a blank period, measuring the time between the occurrence of said negative transition and the end of the blank period, and indicating a last blank period if the time so measured is greater than a predetermined minimum.

0158293

In the preferred embodiment, the last blank detection means comprises a low pass filter to limit the rate of change of the video signal and level detection means to determine whether the rate limited signal reaches the blank level. If the signal reaches the blank level then the non-rate limited signal either fades gradually to the black level or alternatively the black level was sufficiently long to allow the rate limited signal to follow the non-rate limited signal down to the black level. The time constant of the low pass filter is chosen to be sufficiently long to prevent the shorter blank periods at the commencement of and during commercial breaks from reaching the black level.

In the preferred embodiment of the invention, a circuit is provided, having two switch selectable states, for detecting the commencement of a commercial break, the circuit, when in the first state, detecting the first occurrence of a blank period and the circuit, when in the second state, detecting the absence or presence of a signal on an unused line in the vertical blanking period to determine the commencement of a commercial break.

The preferred embodiments also includes an inhibit circuit which inhibits transition of the VCR pause signal for a predetermined minimum period after the commencement of a commercial break and for a second predetermined minimum period after said commercial break. The inhibit circuit also includes a timer which causes the pause signal to be terminated if the end of the commercial break has not been detected within a third predetermined period.

An embodiment of the invention will now be described, by way of example, with reference to the accompanying drawings in which:

Fig. 1 schematically illustrates a circuit block diagram of the preferred embodiment of the present invention; and

Fig. 2 illustrates the inhibit timing sequence for the embodiment of Fig. 1.

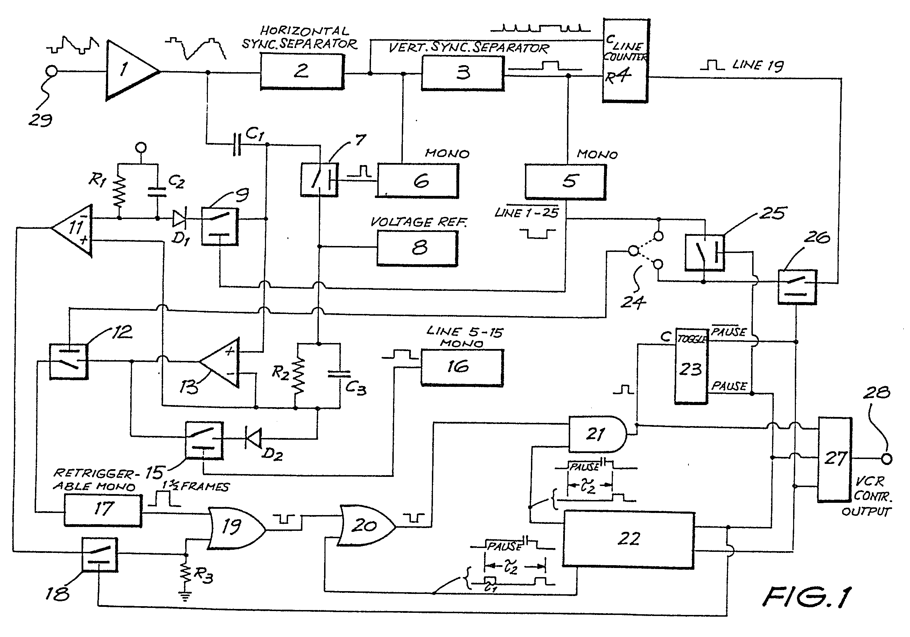

Referring to Fig. 1, the input 29 of this circuit is connected to the video signal output of a video cassette recorder (VCR), and the output 28 of the device is directed to the pause control circuit of the VCR.

The device senses the start of a commercial break by one of two methods:

MODE 1:   Detection of a momentary fade of picture content to the blank level.

MODE 2:   Detection of a loss of video content in a preselected line (line 19 in the illustrated example) within the blanking interval.

The end of the commercial break is marked by detecting a fade of picture content to the blank level with the rate of fade and duration of the blank period taken into consideration. The blank level is sensed automatically by reference to the blank lines transmitted in between the picture carrying portions of picture frames.

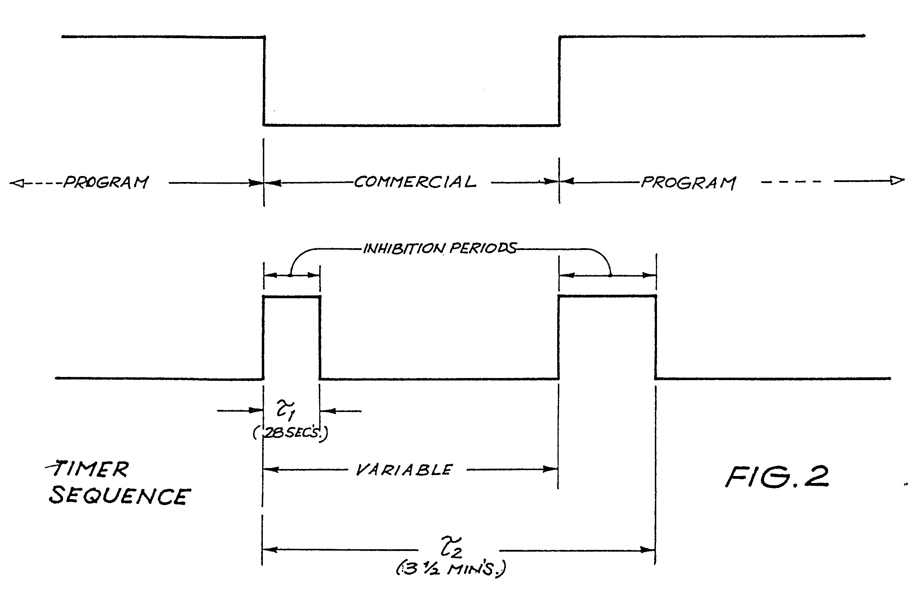

Reliability of the unit is further improved by use of a timing circuit to produce inhibition of the pause control. Referring to Fig. 2, the inhibition occurs for approximately 28 seconds ( $\Upsilon_1$ ) after detection of a commercial interval has caused activation of the pause control, and during that period the pause control cannot be deactivated. Deactivation is again permitted for the 3 minute period following the 28 second period and the VCR will commence recording again upon detection of a suitable blank period. Once recording has commenced the activation of the pause control is again inhibited for the remainder of the previously mentioned 3 minute interval. If no activation takes place during the 3 minute interval, the device then deactivates the pause control, thereby returning the VCR to the record mode.

Referring to Fig. 1, the input 29 of the device is connected to a video signal obtained from the video line output of a VCR. This video signal is directed to a video amplifier 1 which includes a colour burst signal filter. The output of the amplifer 1 is then directed to a horizontal sync. pulse separator, the output of which is in turn directed to a vertical sync. pulse separator 3.

The ouput of the video amplifier 1 is also directed via a capacitor C1 to an electronic switch 7 activated by a monostable circuit 6 which supplies a clamping pulse corresponding to the back porch of the horizontal sync. signals. A reference voltage source 8 is used to clamp the D.C. level of the video signal during the back porch period, established by the monostable circuit 6, to tie the video black level to the reference voltage generated by reference source 8.

An electronic counter 4 is clocked by the horizontal sync. pulses and reset by the vertical sync. pulses to generate a pulse corresponding to a predetermined line interval of the video signal (in this case line 19) the line pulse being then directed to an electronic switch 26.

The monostable circuit 5 is capable of generating a negative going pulse spanning the time interval from the 1st to the 25th horizontal sync. pulse of each frame and this pulse is directed to the electronic switch 9 which together with the video rate limiting circuit, comprising diode D1, capacitor C2 and resistor R1, causes a picture information signal having a limited rate of change in the positive or black level direction to be generated and directed to the comparator 11.

The signal from amplifier 1 is also directed to a comparator 13, the output of which is directed to an electronic switch 15, activated by a monostable circuit 16 which generates a pulse spanning the time interval from the 5th to the 15th horizontal sync. pulse of each frame. The resultant action of the electronic switch 15 is to connect the output of comparator 13 to a black level reference voltage held by capacitor C3 such that, when the output of comparator 13 is low, the reference level established by capacitor C3 is reduced until it is slightly below the black level present at the non-inverting input to comparator 13 during lines 5 to 15 of the frame. The reference level established on capacitor C3 is also directed to the non-inverting input of comparator 11.

An electronic switch 12 selectively connects the output from comparator 13 to a monostable circuit 17, depending on the position of the mode switch 24 and the state of the monostable circuit 5 and the counter 4.

The retriggerable monostable circuit 17 has a time constant of approx. 1 1/2 times the frame interval and the output of the monostable circuit 17 is directed to the OR gate 19 where it is gated with the output of the comparator 11 which is supplied via an electronic switch 18. The swtich 18 is activated by the output of the flip flop 23 such that the output of the comparator 11 is directed to the OR gate 19 only when the state of the flip flop 23 corresponds to the detection of a commercial sequence (PAUSE output is high). The input to OR gate 19 from switch 18 is held low by resistor R3 while the switch 18 is open and goes high when switch 18 is closed, returning low only when a black level is detected by comparator 11 or when switch 18 reopens. The other input to the OR gate 19 will be held high continuously by the output of the retriggerable monostable circuit 18 which is continuously retriggered by each line having any non-black signal level. This input only goes low when a blank period (black level) of greater than about 1 1/2 frames occurs. The output of the OR gate 19 goes low, to produce a change of state in the pause control signal, only when both inputs are simultaneously low.

A timing circuit 22 generates inhibit signals to an OR gate 20, and a pause terminating pulse to an AND gate 21, where the output of the AND gate 21 is used to clock the pause flip flop 23 between the pause state which inhibits recording during the commercial interval and the non-pause state which exists during the program to be recorded. The pause terminating pulse supplied to gate 21 is only generated when the pause period lasts for 3 1/2 minutes, in which case the pause terminating pulse causes the pause flip flop 23 to change state in order to recommence recording.

The electronic switches part 25 and part 26 select the mode of operation automatically depending on the state of the flip flop 23 and the position of the mode switch 24 such that once the device is in the pause state, the line 19 signal is disconnected by switch 26 and the output of monostable circuit 5 is connected instead. The mode switch 24 is preselected manually.

The output signal conditioner 27 of the device is programmable to generate different VCR pause control signals at the device output 28 depending upon the type of VCR in use, enabling switching to be activated either by clocking of the flip flop or by the output levels of the flip flop or both.

It will be recognised by persons skilled in the art that numerous variations and modifications may be made to the invention as described above without departing from the spirit or scope of the invention as broadly described.

CLAIMS:

1. An advertisement detection device comprising input means for receiving a demodulated video signal from a video tuner, means for detecting the commencement of a commercial break transmitted as part of said video signal, last blank period detection means adapted to detect a blank period between the last commercial of a commercial break and the recommencement of the program, said last blank period detection means being adapted to distinguish between blank periods of short duration and a rapid transition to the blank period from blank periods having a slow transition to the blank period, and also being adapted to distinguish said short blank periods with a rapid transition from blank periods of long duration, and output signal generating means responsive to said commercial blank detection means and said last blank detection means to generate a video recorder pause signal during commercial breaks.

2. The detection device according to claim 1 wherein said means for detecting the commencement of a commercial break includes means for detecting a blank period inserted between the program and the first commercial of the commercial break.

3. The detection means according to claim 2 wherein the means for detecting said commencement of a commercial break includes means for detecting the absence or presence of a signal inserted upon an otherwise unused line of a vertical blanking period of the video signal.

4. The detection means according to claim 3 wherein a switch is provided to select between said blank period detection means and said inserted signal detection means as the means of detecting the commencement of a commercial break.

5. The detection means according to any one of the preceding claims, wherein the last blank detection means comprises low pass filter means having an output signal which is substantially limited to a predetermined maximum rate of change and level detection means connected to indicate when said filter output signal reaches a predetermined level related to the blank level of said video signal, wherein the low pass filter has a time constant which is sufficiently long to prevent the filter output signal from reaching the predetermined level during a short blank period inserted at the commencement of commercials and between commercials of a commercial break and the time constant being sufficiently short to allow detection of longer blank periods and slow transitions to blank the blank level which occur after the last commercial of a commercial break.

6. The detection device according to any one of the preceding claims, wherein an inhibit circuit is provided to inhibit transitions of the pause signal to the pause state for a first period of time after the end of a commercial break has been detected, said period being determined by the overall length of the commercial break.

7. The detection device according to claim 6 wherein said inhibit circuit also inhibits transitions of the pause signal from the pause state to the quiescent state for a second predetermined period of time after the detection of the commencement of a commercial break.

8. The detection device according to any one of the preceding claims, wherein a timing circuit is provided to indicate when the pause signal remains in the pause state for greater than a third predetermined period, the output signal generating means being responsive to said timing circuit to alter the pause signal to the quiescent state if said third predetermined period is exceeded.

9. The detection device according to claim 6 or 7, wherein a timing circuit is provided to indicate when the pause signal remains in the pause state for greater than a third predetermined period, the output signal generating means being responsive to said timing circuit to alter the pause signal to the quiescent state if said third predetermined period is exceeded and wherein said first period of time is

0158293

equal to the third predetermined period of time minus the
duration of the commercial break.

FIG.1

PROGRAM ← COMMERCIAL → PROGRAM

INHIBITION PERIODS

$\tau_1$ (28 SEC'S.)

TIMER SEQUENCE

VARIABLE

$\tau_2$ (3 ½ MIN'S.)

FIG. 2